(19) Europäisches Patentamt
European Patent Office
Office européen des brevets

(11) **EP 3 530 890 B1**

(12) **EUROPÄISCHE PATENTSCHRIFT**

(45) Veröffentlichungstag und Bekanntmachung des Hinweises auf die Patenterteilung:
**12.10.2022  Patentblatt 2022/41**

(21) Anmeldenummer: **18158794.0**

(22) Anmeldetag: **27.02.2018**

(51) Internationale Patentklassifikation (IPC):
***F01K 23/06*** *(2006.01)*

(52) Gemeinsame Patentklassifikation (CPC):
**F01K 23/065;** Y02T 10/12

(54) **ANTRIEB MIT INTEGRIERTEM ORC**

DRIVE WITH INTEGRATED ORC

ENTRAÎNEMENT POURVU D'UN ORC INTÉGRÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.08.2019  Patentblatt 2019/35**

(73) Patentinhaber: **Orcan Energy AG
81379 München (DE)**

(72) Erfinder:
• **Schuster, Andreas
86874 Tussenhausen (DE)**
• **Langer, Roy
89129 Langenau (DE)**
• **Springer, Jens-Patrick
81371 München (DE)**
• **Walter, Daniela
85653 Aying (DE)**
• **Aumann, Richard
80807 München (DE)**

(74) Vertreter: **Grünecker Patent- und Rechtsanwälte PartG mbB
Leopoldstraße 4
80802 München (DE)**

(56) Entgegenhaltungen:
DE-A1-102016 100 912    US-A1- 2015 377 180
US-A1- 2016 061 059

## Beschreibung

### Gebiet der Erfindung

Die Erfindung betrifft eine Vorrichtung zur Nutzung der Abwärme eines Verbrennungsmotors, wobei die Vorrichtung die Merkmale des Anspruchs 1 umfasst. Weiterhin betrifft die Erfindung ein entsprechendes Verfahren, das die Merkmale des Anspruchs 13 umfasst.

### Stand der Technik

Bei einem thermischen Prozess in einer Thermoprozessvorrichtung können Anforderungen hinsichtlich der Temperatur in einem bestimmten Bereich der Thermoprozessvorrichtung bestehen, um beispielsweise eine gute Funktion zu gewährleisten oder um einen Verschleiß gewisser Elemente der Thermoprozessvorrichtung zu vermeiden. Wird Abwärme von der Thermoprozessvorrichtung über einen Wärmetauscher genutzt, um damit eine thermische Kreisprozessvorrichtung (beispielsweise ORC-Vorrichtung) zu betreiben und elektrische oder mechanische Energie zu erzeugen, könnte es einerseits ein Erfordernis sein, dass ein bestimmter Bereich immer eine vorgegebene Mindesttemperatur aufweisen soll. Andererseits soll über den Wärmetauscher möglichst viel Abwärme genutzt werden. Im nachfolgenden Beispiel eines Abgaswärmeübertragers wird dies weiter ausgeführt.

Bei der Auslegung der Wärmezufuhr aus dem Abgas eines Verbrennungsmotors (z.B. Dieselmotor) zu einem ORC-System, um daraus beispielsweise elektrische Energie zu gewinnen, aber auch ganz allgemein gibt es im Zusammenhang mit einem Abgaswärmeübertrager (AGWÜ) prinzipiell die folgenden zwei Grenzbereiche. Wird das System auf die maximale Abkühlung im Nennbetrieb ausgelegt, wird bei schwacher Last eine Mindesttemperatur im Abgas unterschritten, was zur Kondensation von Abgasbestandteilen und als Folge davon zur Korrosion und Verschmutzung (z.B. durch Rußbildung) des AGWÜ führt. Dies ist insbesondere bei Brennstoffen mit hohen Schwefelkonzentrationen wie z. B. Biogas oder Schweröl oder auch unvollständiger Verbrennung problematisch. Wird das System dagegen darauf ausgelegt, die Mindesttemperatur nicht zu unterschreiten, wird im Nennbetrieb nicht bis an die erlaubte Grenze abgekühlt, so dass im überwiegenden Teil der Betriebszeit nicht das gesamte Abgaspotenzial ausgenutzt wird, was zu einem sinkenden Systemwirkungsgrad führt. Dies ist insbesondere dann von Bedeutung, wenn der AGWÜ an einen nicht-stationären Prozess gekoppelt ist, wie beispielsweise an den Verbrennungsmotor eines Schiffes. Die vorliegende Erfindung ist jedoch nicht auf diesen Anwendungsfall beschränkt, sondern kann auch bei stationären Prozessen und bei anderen Wärmequellen als Verbrennungsmotoren sinnvoll eingesetzt werden.

Aufgrund der unveränderlichen, konstruktiv festgelegten Fläche des AGWÜ muss der AGWÜ üblicherweise auf den spezifischen Anwendungsfall ausgelegt werden. Für unterschiedliche Motoren müssen unterschiedliche AGWÜ verwendet werden. Das wirkt einer hohen Standardisierung und einer Verwendung von Gleichteilen entgegen, die jedoch angestrebt werden.

Gleichzeitig sollte sichergestellt werden, dass die vom AGWÜ eingetragene Wärme auch dann abgeführt werden kann, wenn das ORC-System ausfällt. Denn insbesondere bei der Verwendung von Verbrennungsmotoren für Antriebszwecke oder eine durchgängige Stromerzeugung bestehen harte Anforderungen an die Notlauffähigkeiten der Komponenten. Daher sollte das ORC-System so ausgeführt werden, dass bei Ausfall des ORC-Systems oder seiner Komponenten die Funktion des Antriebes nicht eingeschränkt wird. Drehende Maschinen wie Pumpen sind Komponenten, die besonders anfällig für Verschleiß und Ausfall sind, und diese werden daher bisher immer redundant bzw. doppelt ausgeführt. Dies führt zu erhöhten Gesamtkosten. Die Dokumente DE102016100912 A1 und US2016/0061059 A1 offenbaren Systeme zur Nutzung der Abwärme eines Verbrennungsmotors.

### Beschreibung der Erfindung

Aufgabe der Erfindung ist es, die genannten Nachteile zumindest teilweise zu überwinden.

Diese Aufgabe wird gelöst durch eine Vorrichtung nach Anspruch 1.

Die erfindungsgemäße Vorrichtung hat den Vorteil, dass mit Hilfe der Mittel zum Steuern des durch den zweiten oder vierten Wärmeübertrager fließenden Massenstroms des Wärmeträgermediums eine variable Anpassung an die sich verändernden Betriebsbedingungen der Thermoprozessvorrichtung (z.B. des Verbrennungsmotors) erfolgen kann. Insbesondere kann die im Wärmestrom (Abgasstrom) vorhandene Wärme möglichst gut genutzt werden, wobei gleichzeitig beispielsweise eine Unterschreitung einer Mindesttemperatur (z. B. Unterschreitung der Abgastemperatur mit dadurch bedingter Kondensation des Abgases) im ersten oder zweiten Wärmeübertrager vermieden wird. Der erste Wärmeübertrager entnimmt dem Abgas Wärme bei einem vergleichweise höheren Temperaturniveau als der zweite Wärmeübertrager. Entsprechend überträgt der dritte Wärmeübertrager Wärme auf das Arbeitsmedium der thermodynamischen Kreisprozessvorrichtung bei einem vergleichsweise höheren Tempertaurniveau als der vierte Wärmeübertrager.

Die erfindungsgemäße Vorrichtung kann dahingehend weitergebildet werden, dass der erste und der dritte Wärmeübertrager in einem ersten Wärmeträgermediumkreislauf mit einer ersten Pumpe angeordnet sein können und der zweite und der vierte Wärmeübertrager in einem zweiten Wärmeträgermediumkreislauf mit einer zweiten Pumpe angeordnet sein können, wobei der durch den zweiten Wärmeübertrager im zweiten Wärmeträgermediumkreislauf fließende Massenstrom des Wärmeträgermediums steuerbar sein kann, insbesondere mittels einer Bypassleitung zum wenigstens teilweisen Überbrücken des zweiten Wärmeübertragers und einem Ventil zum Einstellen des überbrückenden Anteils des Massenstroms. Auf diese Weise stehen zwei separate Kreisläufe mit einem Wärmeträgermedium bereit, und zwar ein Hochtemperaturkreislauf mit dem ersten und dritten Wärmeübertrager und ein Niedertemperaturkreislauf mit dem zweiten und vierten Wärmeübertrager. Dabei kann das Wärmeträgermedium in den beiden Kreisläufen gleich oder verschieden sein. Insbesondere kann das Wärmeträgermedium in beiden Kreisläufen Wasser umfassen. Durch Steuern des Massenstroms durch den zweiten Wärmeübertrager, beispielsweise durch Vorbeileiten wenigstens eines Teils des Wärmeüberträgerfluids in der Bypassleitung, kann die dem Abgas durch den zweiten Wärmeübertrager entnommene Wärme und/oder die dem Arbeitsmedium durch den vierten Wärmeübertrager zugeführte Wärme gesteuert werden.

Eine andere Weiterbildung der erfindungsgemäßen Vorrichtung besteht darin, dass der erste, zweite, dritte und vierte Wärmeübertrager in einem Wärmeträgermediumkreislauf mit einer ersten Pumpe angeordnet sein können, wobei der durch den vierten Wärmeübertrager fließende Massenstrom des Wärmeträgermediums steuerbar sein kann, insbesondere mittels einer Bypassleitung zum wenigstens teilweisen Überbrücken des vierten Wärmeübertragers und einem Ventil zum Einstellen des überbrückenden Anteils des Massenstroms. Dabei kann das Wärmeträgermedium im Wärmeträgermediumkreislauf Wasser umfassen. Durch Steuern den Massenstroms durch den vierten Wärmeübertrager, beispielsweise durch Vorbeileiten wenigstens eines Teils des Massenstroms des Wärmeträgermediums in der Bypassleitung, kann die dem Arbeitsmedium durch den vierten Wärmeübertrager zugeführte Wärme und/oder die dem Abgas entnommene Wärme gesteuert werden.

Gemäß einer anderen Weiterbildung kann eine Verbindung zwischen einem Ausgang des zweiten Wärmeübertragers mit einem Eingang des ersten Wärmeübertragers vorgesehen sein, wodurch aus dem Ausgang des zweiten Wärmeübertragers austretendes Wärmeträgermedium vollständig dem Eingang des ersten Wärmeübertragers zuführbar sein kann. Auf diese Weise ergibt sich eine Kopplung des ersten und zweiten Wärmeübertragers.

Dies kann dahingehend weitergebildet werden, dass der erste und der zweite Wärmeübertrager in einem gemeinsamen Gehäuse angeordnet sein können, die Verbindung des Ausgangs des zweiten Wärmeübertragers mit dem Eingang des ersten Wärmeübertragers innerhalb des Gehäuses ausgebildet sein kann, und das Gehäuse einen ersten Eingang zum Zuführen von Wärmeträgermedium zum ersten Wärmeübertrager, einen zweiten Eingang zum Zuführen von Wärmeträgermedium zum zweiten Wärmeübertrager und einen Ausgang zum Abführen von Wärmeträgermedium vom ersten Wärmeübertrager aufweisen kann. Auf diese Weise ergibt sich eine kompakte Ausgestaltung des ersten und zweiten Wärmeübertragers als Einzelkomponente. Der Verrohrungsaufwand wird reduziert, da es nur drei Anschlüsse für das Wärmeträgermedium (vorzugsweise Wasser oder Wasser umfassend) gibt.

Gemäß einer anderen Weiterbildung kann die erste Pumpe zwischen einem Ausgang für Wärmeträgermedium des dritten Wärmeübertragers und einem Eingang für Wärmeträgermedium des ersten Wärmeübertragers angeordnet sein, und stromabwärts der ersten Pumpe kann eine Abzweigung für Wärmeträgermedium zum vierten Wärmeübertrager vorgesehen sein. Mit der (einzelnen) Pumpe kann der Kreislauf des Wärmeträgermediums aufrechterhalten werden. Über die Abzweigung wird Wärmeträgermedium auch zum vierten Wärmeübertrager gepumpt.

Dies kann dahingehend weitergebildet werden, dass stromabwärts der Abzweigung eine Blende zur Erzeugung eines Strömungswiderstands zum Eingang des ersten Wärmeübertragers vorgesehen sein kann, oder wobei zwischen der Abzweigung und einem Eingang des vierten Wärmeübertragers eine weitere Pumpe vorgesehen sein kann. Auf diese Weise wird eine verbesserte Förderung des Wärmeträgermediums zum vierten Wärmeübertrager und anschließend zum zweiten Wärmeübertrager sicher gestellt.

Eine andere Weiterbildung der erfindungsgemäßen Vorrichtung oder einer der genannten Weiterbildungen besteht darin, dass die thermodynamische Kreisprozessvorrichtung weiterhin eine Expansionsmaschine zur Erzeugung von mechanischer Energie aus im dritten und vierten Wärmeübertrager an das Arbeitsmedium übertragener Wärmeenergie, insbesondere mit einem mit der Expansionsmaschine gekoppelten Generator zur Erzeugung von elektrischer Energie, einen Kondensator zum Kondensieren von in der Expansionsmaschine expandierten Arbeitsmediums und eine Speisepumpe zum Pumpen des Arbeitsmediums umfassen kann.

Dies kann dahingehend weitergebildet werden, dass die thermodynamische Kreisprozessvorrichtung weiterhin einen Kühlkreislauf mit Wärmeträgermedium für den Kondensator, einem Kühler zum Abführen von Wärme aus dem Wärmeträgermedium und einer zweite Pumpe zum Pumpen des Wärmeträgermediums umfassen kann, wobei die thermodynamische Kreisprozessvorrichtung überbrückbar vorgesehen sein kann, um Wärme aus dem Wärmeträgermediumkreislauf über den Kühler abzuführen. Dies hat den Vorteil, dass bei einer Störung der thermodynamischen Kreisprozessvorrichtung (beispielsweise Ausfall einer deren Komponenten) weiterhin eine Wärmeabfuhr aus dem Abgas des Verbrennungsmotors über den Kühler erfolgen kann.

Dies kann dahingehend weitergebildet werden, dass zum Überbrücken der thermodynamischen Kreisprozessvorrichtung im Wärmeträgermediumkreislauf eine Abzweigung mit einem zweiten Ventil zum Abführen von zu kühlendem Wärmeträgermedium zum Kühler und eine Zuführung zum Zuführen von im Kühler gekühltem Wärmeträgermedium zum Wärmeträgermediumkreislauf vorgesehen sein können, und wobei im Kühlkreislauf ein drittes Ventil zum Sperren des Kühlkreislaufs vorgesehen sein kann. Mit dem dritten Ventil kann der Kühlkreislauf für die thermodynamische Kreisprozessvorrichtung unterbrochen werden und es kann eine Zirkulation von Wärmeträgermedium aus dem Wärmeträgermediumkreislauf über den Kühler erfolgen.

Dies kann dahingehend weitergebildet werden, dass das dritte Ventil im Kühlkreislauf zwischen einem Zuführpunkt und einem Abführpunkt für das Wärmeträgermedium aus dem Wärmeträgermediumkreislauf angeordnet sein kann, wobei vorzugsweise weiterhin eine Rückschlagklappe zwischen dem Zuführpunkt und dem Abführpunkt vorgesehen sein kann, um bei geöffnetem dritten Ventil eine Strömen vom Zuführpunkt zum Abführpunkt unter Umgehung des Kühlers zu verhindern.

Eine andere Weiterbildung der erfindungsgemäßen Vorrichtung oder einer der genannten Weiterbildungen besteht darin, dass weiterhin ein fünfter Wärmeübertrager zum Übertragen von Wärme aus einer Kühlflüssigkeit der Thermoprozessvorrichtung, insbesondere des Verbrennungsmotors, und/oder von Wärme einer anderen Niedertemperatur-Wärmequelle auf das Arbeitsmedium der thermodynamischen Kreisprozessvorrichtung vorgesehen sein kann, wobei der fünfte Wärmeübertrager in Bezug auf den Strom des Arbeitsmediums stromaufwärts oder stromabwärts vom vierten Wärmeübertrager angeordnet sein kann.

Die erfindungsgemäße Aufgabe wird weiterhin gelöst durch ein Verfahren nach Anspruch 13.

Das erfindungsgemäße Verfahren zur Nutzung der Abwärme eines Verbrennungsmotors umfasst die Merkmale des Anspruchs 13.

Die Vorteile des erfindungsgemäßen Verfahrens und dessen Weiterbildungen entsprechen - wenn nicht anders angegeben - jenen der erfindungsgemäßen Vorrichtung.

Gemäß einer Weiterbildung des erfindungsgemäßen Verfahrens können der erste und der dritte Wärmeübertrager in einem ersten Wärmeträgermediumkreislauf mit einer ersten Pumpe angeordnet sein und der zweite und der vierte Wärmeübertrager in einem zweiten Wärmeträgermediumkreislauf mit einer zweiten Pumpe angeordnet sein, wobei der durch den zweiten Wärmeübertrager im zweiten Wärmeträgermediumkreislauf fließende Massenstrom des Wärmeträgermediums gesteuert werden kann, insbesondere durch wenigstens teilweises Überbrücken des zweiten Wärmeübertragers mittels einer Bypassleitung und durch Einstellen des überbrückenden Anteils des Massenstroms mit einem Ventil.

Eine andere Weiterbildung besteht darin, dass der erste, zweite, dritte und vierte Wärmeübertrager in einem Wärmeträgermediumkreislauf mit einer ersten Pumpe angeordnet sein können, wobei der durch den vierten Wärmeübertrager fließende Massenstrom des Wärmeträgermediums gesteuert werden kann, insbesondere durch wenigstens teilweises Überbrücken des vierten Wärmeübertragers mittels einer Bypassleitung und durch Einstellen des überbrückenden Anteils des Massenstroms mit einem Ventil.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

**Zeichnungen**

Fig. 1 zeigt eine erste Ausführungsform der erfindungsgemäßen Vorrichtung.

Fig. 2 zeigt eine zweite Ausführungsform der erfindungsgemäßen Vorrichtung.

Fig. 3 zeigt ein T-Q-Diagramm

Fig. 4 zeigt eine dritte Ausführungsform der erfindungsgemäßen Vorrichtung.

Fig. 5 zeigt eine vierte Ausführungsform der erfindungsgemäßen Vorrichtung.

Fig. 6 zeigt eine fünfte Ausführungsform der erfindungsgemäßen Vorrichtung.

**Ausführungsformen**

Ein wesentliches Merkmal der Erfindung besteht darin, eine optimale Nutzung der Wärme eines Massenstroms (beispielsweise Abwärme eines Abgasstroms) auch im Betrieb abseits der Auslegung (Nennbetrieb) sicherzustellen. Gleichzeitig wird das Unterschreiten einer minimalen Temperatur (beispielsweise Abgastemperatur) vermieden, um den Massenstrom vor einer zu starken Auskühlung zu schützen. Die erfindungsgemäße Verschaltung gemäß einigen Ausführungsformen ermöglicht zusätzlich die Wärmeabfuhr eines Motors oder einer sonstigen Wärmequelle (z.B. ein Kühlkreislauf) redundant zu gestalten und auch bei Ausfall oder Nichtbenutzung / Teillast des ORC sicherzustellen.

Darüber hinaus ergeben sich durch die Verschaltungen noch weitere Vorteile, die nachfolgend genannt und im Zusammenhang mit den Ausführungsformen im Detail erläutert werden. Als Vorteile sind zu nennen, dass das Wärmepotential (z.B. Abgaswärmepotenzial) voll ausgeschöpft wird und der Systemwirkungsgrad steigt, dass eine Abgaskondensation und Korrosion im Abgaswärmeübertrager - AGWÜ (erster Wärmeübertrager) vermieden wird, dass auch bei einem Ausfall einer der beiden Pumpen die Wärme aus dem Abgas und Motorkühlwasser abgeführt werden kann, weshalb die Pumpen nicht redundant ausgeführt werden müssen, dass eine variable Durchströmung des Economisers (Eco, zweiter Wärmeübertrager) eine Anpassung an veränderliche Betriebsbedingungen ermöglicht, etwa dadurch dass ein AGWÜ auf unterschiedliche Motoren passt, und dass zudem eine verringerter Wärmeübergang durch zunehmende Verschmutzung kompensierbar ist.

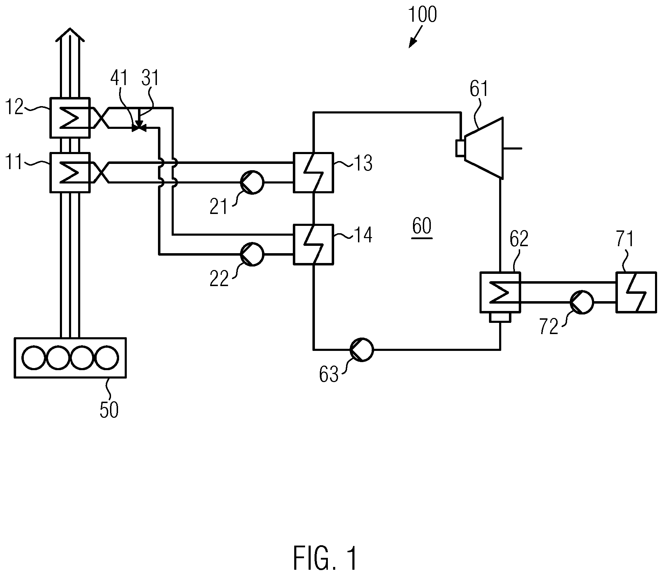

Fig. 1 zeigt eine erste Ausführungsform der erfindungsgemäßen Vorrichtung.

Die erste Ausführungsform 100 umfasst einen ersten Wärmeübertrager 11 (AGWÜ) zum Übertragen von Wärme aus einem Abgasstrom eines Verbrennungsmotors auf ein Wärmeträgermedium; einen zweiten Wärmeübertrager 12 (Economiser, Eco) zum Übertragen von Wärme aus dem Abgasstrom auf ein Wärmeträgermedium, wobei der zweite Wärmeübertrager 12 in Bezug auf den Abgasstrom stromabwärts vom ersten Wärmeübertrager 11 angeordnet ist; eine Organic Rankine Cycle-Vorrichtung (ORC) 60, mit einem dritten Wärmeübertrager 13 (Verdampfer) zum Übertragen von Wärme aus dem Wärmeträgermedium auf ein Arbeitsmedium der thermodynamischen Kreisprozessvorrichtung und mit einem vierten Wärmeübertrager 14 (Vorwärmer) zum Übertragen von Wärme aus dem Wärmeträgermedium auf das Arbeitsmedium, wobei der vierte Wärmeübertrager 14 in Bezug auf den Strom des Arbeitsmediums stromaufwärts vom dritten Wärmeübertrager 13 angeordnet ist; wobei im dritten Wärmeübertrager 13 abgekühltes Wärmeträgermedium zumindest teilweise dem ersten Wärmeübertrager 11 zum Erwärmen zuführbar ist und wobei im vierten Wärmeübertrager 14 abgekühltes Wärmeträgermedium zumindest teilweise dem zweiten Wärmeübertrager 12 zum Erwärmen zuführbar ist. Weiterhin umfasst die erfindungsgemäße Vorrichtung Mittel 31, 41 zum Steuern des durch den zweiten Wärmeübertrager 12 oder durch den vierten Wärmeübertrager 14 fließenden Massenstroms des Wärmeträgermediums.

In der erfindungsgemäßen Vorrichtung gemäß der ersten Ausführungsform 100 sind der erste und der dritte Wärmeübertrager 11, 13 in einem ersten Wärmeträgermediumkreislauf mit einer ersten Pumpe 21 angeordnet und der zweite und der vierte Wärmeübertrager 12, 14 in einem zweiten Wärmeträgermediumkreislauf mit einer zweiten Pumpe 22 angeordnet, wobei der durch den zweiten Wärmeübertrager 12 im zweiten Wärmeträgermediumkreislauf fließende Massenstrom des Wärmeträgermediums mittels einer Bypassleitung 31 zum wenigstens teilweisen Überbrücken des zweiten Wärmeübertragers 12 und einem Ventil 41 zum Einstellen des überbrückenden Anteils des Massenstroms steuerbar ist.

Die ORC-Vorrichtung 60 umfasst weiterhin eine Expansionsmaschine 61, einen Kondensator 62 und einen Speisepumpe 63. Der Kondensator 62 ist zudem Teil eines Kühlkreislaufs mit einem Kühler 71 (z.B. ein Luftkühler) und einer Kühlmittelpumpe 72. Alternativ kann der Kondensator 62 die Wärme auch direkt an Luft abgeben (nicht dargestellt).

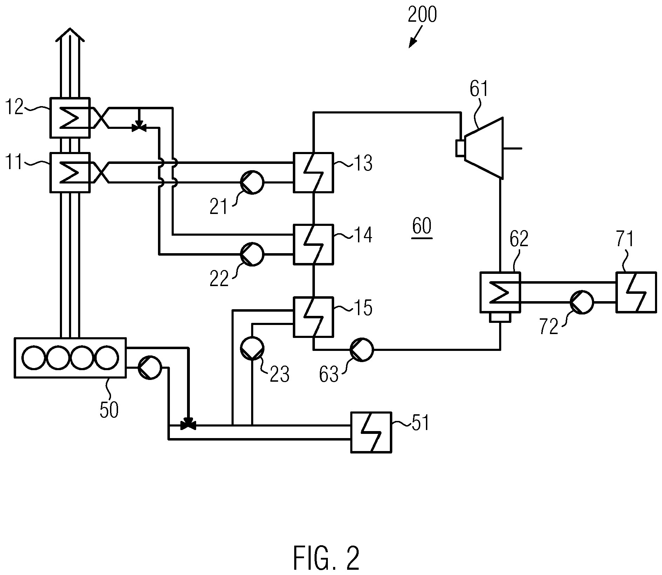

Fig. 2 zeigt eine zweite Ausführungsform der erfindungsgemäßen Vorrichtung.

Die zweite Ausführungsform 200 umfasst weiterhin einen fünfter Wärmeübertrager 15 zum Übertragen von Wärme aus einer Kühlflüssigkeit des Verbrennungsmotors 50 auf das Arbeitsmedium der thermodynamischen Kreisprozessvorrichtung, wobei der fünfte Wärmeübertrager 15 in Bezug auf den Strom des Arbeitsmediums stromaufwärts vom vierten Wärmeübertrager 14 angeordnet ist. Weiterhin ist in dieser Zeichnung der mit dem Verbrennungsmotor 50 gekoppelte Kühlkreislauf mit dem Motorkühler 51 dargestellt, aus welchem die Kühlflüssigkeit über den dritten Wärmeübertrager 15 und eine Pumpe 23 abgezweigt wird. Die weiteren Komponenten entsprechen denen der ersten Ausführungsform 100 gemäß Fig. 1.

## Optimale Abgasausnutzung durch variabel durchströmbaren Economiser

Die vorgestellten Verschaltungen gemäß der ersten und zweiten Ausführungsform 100, 200 besitzen die Besonderheit eines variabel durchströmbaren Abgaseconomisers (Eco) 12. Der Hauptanteil der Abwärme wird dem ORC-Prozess über den Abgaswärmeübertrager (AGWÜ) 11 im Hochtemperatur-Kreis (HT) zur Verfügung gestellt. Die an das Wärmeträgermedium übertragene Wärme wird im Verdampfer 13 zum Verdampfen des Arbeitsmediums genutzt. Im Niedertemperatur-Kreis (NT) durchströmt das Wärmeträgermedium den Eco 12 und kühlt das Abgas auf die Solltemperatur, wobei die Wärme dem Vorwärmer (VW) 14 zugeführt wird. Wenn sich die Eco-Austrittstemperatur des Abgases der Mindesttemperatur nähert, wird das 3-Wege-Ventil 41 geöffnet. Das Fluid umgeht den Eco 12, dem Abgas wird folglich keine weitere Wärme entzogen. Da die weitere Auskühlung des Abgases gestoppt wird, ist diese Verschaltung sehr zuverlässig, was das Vermeiden der Kondensation von Abgasbestandteilen angeht. Um sicherzugehen, dass im Eco 12 befindliches Wasser nicht zu sieden beginnt, kann ein Mindestdurchfluss gewährleistet werden.

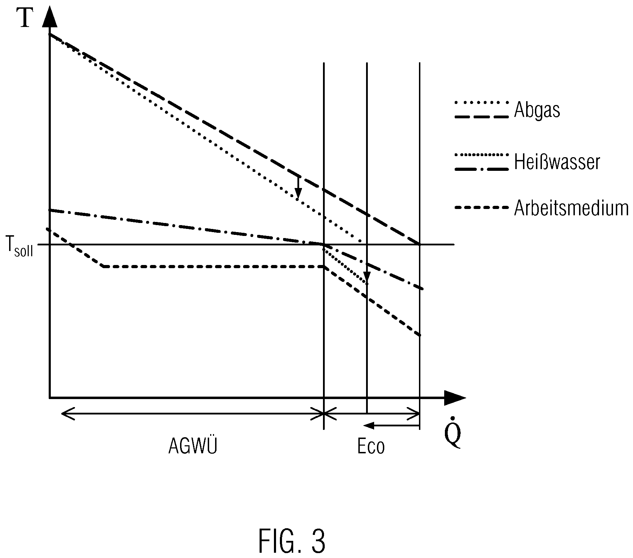

Zur Verdeutlichung dieses Zusammenhangs wird Bezug auf das T-Q-Diagramm gemäß Fig. 3 genommen:

Wenn die Gefahr besteht, dass die Abgas-Austrittstemperatur die Mindesttemperatur unterschreitet, wird der Wassermassenstrom durch den Eco 12 gesenkt. Dadurch erhöht sich die Wasser-Austrittstemperatur bzw. der Gradient der Temperaturerhöhung. Da die Temperaturdifferenz zwischen dem Abgas und dem Heißwasser durch die endliche Wärmeübertragerfläche begrenzt ist, wird die Abgas-Austrittstemperatur durch die Heißwassertemperatur begrenzt. Um dies zu erreichen wird das 3-Wege-Ventil 41 geöffnet.

## Automatische Verschmutzungskompensation

Im Lauf der Zeit verringert sich die im AGWÜ 11 übertragene Wärmeleistung Q, da die zunehmenden Ruß- bzw. Schmutzablagerungen auf der Abgasseite den Wärmedurchgang U vom Abgas auf das Wasser verschlechtern. Der Wärmestrom errechnet sich zu:

$$\dot{Q} = U \cdot A \cdot \Delta T_{log}$$

Mit der Wärmeleistung Q, dem Wärmedurchgangskoeffizienten U, der Oberfläche A und der logarithmischen Temperaturdifferenz $\Delta T_{log}$.

Durch die Verschaltung kann dieser Effekt kompensiert werden. Im neuen, nicht verschmutzen Zustand wird die Maximaldurchströmung des Wassers durch den AGWÜ begrenzt. Gemäß dem Zusammenhang

$$\dot{Q} = \dot{m} \cdot c_p \cdot \Delta T$$

mit dem Wärmestrom $\dot{Q}$, dem Massenstrom $\dot{m}$, der spezifischen isobaren Wärmekapazität $c_p$ und der Temperaturspreizung $\Delta T$, wird weniger Wärme übertragen, je geringer der Massenstrom ist. Mit zunehmender Verschmutzung kann die Maximaldurchströmung entsprechend angepasst werden, d. h. erhöht werden, wodurch der verschlechterte Wärmeübergang kompensiert wird.

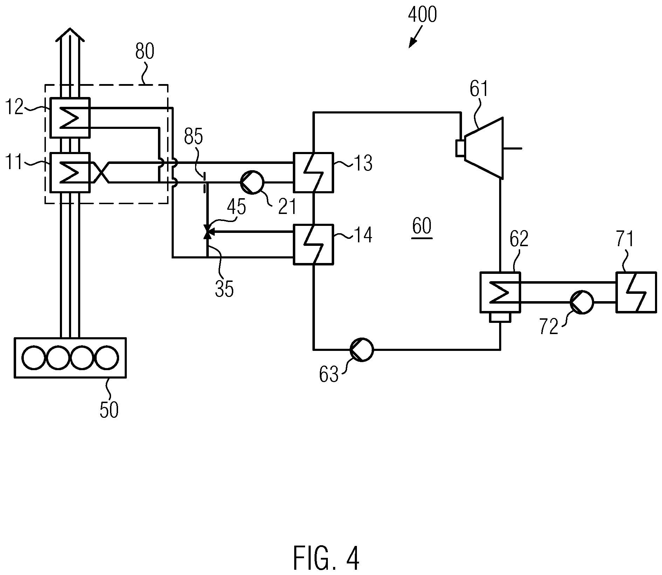

Fig. 4 zeigt eine dritte Ausführungsform der erfindungsgemäßen Vorrichtung.

In der dritten Ausführungsform 400 der erfindungsgemäßen Vorrichtung sind der erste, zweite, dritte und vierte Wärmeübertrager 11, 12, 13, 14 in einem Wärmeträgermediumkreislauf mit einer ersten Pumpe 21 angeordnet, wobei der durch den vierten Wärmeübertrager 14 fließende Massenstrom des Wärmeträgermediums mittels einer Bypassleitung 35 zum wenigstens teilweisen Überbrücken des vierten Wärmeübertragers 14 und einem Ventil 45 zum Einstellen des überbrückenden Anteils des Massenstroms steuerbar ist. Durch Steuern des Massenstroms durch den vierten Wärmeübertrager 14, beispielsweise durch Vorbeileiten wenigstens eines Teils des Massenstroms des Wärmeträgermediums in der Bypassleitung 35 mittels Ventil 45, kann die dem Arbeitsmedium durch den vierten Wärmeübertrager 14 zugeführte Wärme und/oder die dem Abgas entnommene Wärme gesteuert werden.

Dabei sind die beiden Heißwasserkreise miteinander verbunden. Hieraus ergibt sich der Vorteil, dass nur eine Heißwasser-Umwälzpumpe 21 benötigt wird. Ebenso kann die Position des 3-Wege-Ventiles 45 geändert werden, so dass statt dem Eco 12 der Vorwärmer (VW) 14 umgangen werden kann. Die Variation der Position des 3-Wege-Ventils 45 ist hierbei für beide Verschaltungsvarianten gemäß Fig. 1 und 2 sowie Fig. 4 möglich.

Auch in dieser Variante ist die Ausschöpfung des vollen Abgaspotenzials unabhängig vom Motor-Betriebspunkt gegeben. Wenn die Minimaltemperatur des Abgases durch die Auskühlung über den AGWÜ allein noch nicht erreicht wird, wird das Ventil (ganz oder teilweise) geöffnet, wodurch der VW 14 durchströmt wird. Die Blende 85 erzeugt einen Strömungswiderstand in der direkten Leitung zum AGWÜ 11, damit das Wasser zum 3-Wege-Ventil 45 strömt.

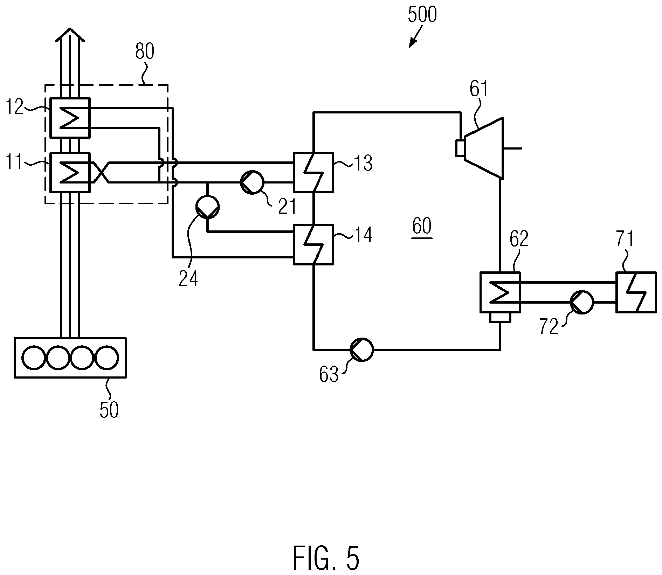

Alternativ kann anstelle des 3-Wege-Ventils eine weitere, regelbare Pumpe vorgesehen werden um den Massenstrom Richtung VW 14 zu leiten. Das Wasser aus dem Zwischenkreis wird durch den VW 14 weiter ausgekühlt und anschließend im Eco 12 wieder erwärmt. Siehe dazu die vierte Ausführungsform gemäß Fig. 5.

Erfindungsgemäß wird die Eco-Eintrittstemperatur derart eingestellt, dass das Rauchgas auf die Solltemperatur ausgekühlt wird. Sobald die Abgas-Austrittstemperatur aus dem Eco 12 unter die Solltemperatur sinkt, wird das Ventil 45 geöffnet, wodurch der VW 14 zunehmend umgangen wird. Es wird weniger Wärme in den ORC 60 eingekoppelt, während das Wasser welches dem Eco 12 zuströmt, eine höhere Temperatur aufweist, die sich vorzugsweise nahe dem Taupunkt des Abgases befindet. Hierdurch wird eine Kondensation des Abgases verhindert. Der Vorteil dieser Position des 3-Wege-Ventils 45 liegt darin, dass der AGWÜ 11 immer durchströmt wird. Dadurch können sich keine lokalen Hot-Spots bilden die eine Verdampfung des Wassers zur Folge hätten.

## Flexibilität im Betrieb

Die Verschaltung besitzt weitere Vorteile. Über die Temperatur- und Massenstromvariable Durchströmung des Ecos lässt sich die Abkühlung des Abgases im Eco steuern. Dadurch kann der Prozess an die jeweiligen Abgasparameter (Temperaturen, Massenströme) der jeweiligen Wärmequelle angepasst werden. Wenn die Wärmemenge im Abgas nicht mehr für den Eco-Betrieb ausreicht, kann die Abgaskühlung begrenzt werden, indem die Wasser-Eintrittstemperatur erhöht wird, wobei gleichzeitig weniger Wärme von ORC-aufgenommen wird. Hierdurch wird eine höhere Standardisierung erreicht, da mit einer geringeren Palette an unterschiedlichen AGWÜ dieselbe oder eine größere Bandbreite an Wärmequellen (z.B. Diesel- und Gasmotoren) abgedeckt werden kann. Ebenso ist es möglich, eine feste Durchströmung des AGWÜ einzustellen, wenn eine Wärmequelle in einem stationären Punkt betrieben werden soll. Auch hier ermöglicht eine feste Aufteilung (die jedoch von Fall zu Fall variiert werden kann) eine Abdeckung verschiedener Leistungsgrößen. Im Extremfall passt ein standardisierter AGWÜ auf alle relevanten Anwendungen (stationär, nicht-stationär, sowie verschieden geartete Wärmequellen). Dadurch wird erreicht, dass mehr Gleichteile eingesetzt werden können, was große logistische und wirtschaftliche Vorteile mit sich bringt.

Über die Spreizung der Heißwassertemperatur im Economiser, die mit dem Wassermassenstrom durch den Economiser korrespondiert, lässt sich weiterhin der Abstand, also die Temperaturdifferenz, zwischen der Abgastemperatur und der Wassertemperatur vergrößern. Hierdurch verringert sich die für die Wärmeübertragung benötigte Fläche im AGWÜ. Zwar vergrößert sich im Gegenzug dazu die Fläche für die Wärmeübertragung vom Wasser auf das Arbeitsmedium. Die Fläche für den Verdampfer und Vorwärmer ist jedoch spezifisch günstiger als für den AGWÜ, so dass sich hier noch ein wirtschaftlicher Vorteil ergibt.

In einer weiteren Verbesserung können die Wärmetauscherflächen für Eco und AGWÜ in einem einzigen Abgaswärmetauscher integriert sein (Siehe gestrichelte Markierung in Fig. 4). Der Heißwasserkreis kann dabei innerhalb des Gehäuses 80 so verschaltet werden, dass nur drei Heißwasseranschlüsse am AGWÜ nötig sind. Dadurch kann der AGWÜ sehr viel kompakter konstruiert und der Verrohrungsaufwand reduziert werden.

Fig. 5 zeigt eine vierte Ausführungsform der erfindungsgemäßen Vorrichtung.

Eine Abwandlung der dritten Ausführungsform gemäß Fig. 4 ist in Fig. 5 als vierte Ausführungsform 500 dargestellt.

Anstelle des 3-Wege-Ventils (und der Blende) ist eine weitere, regelbare Pumpe 24 vorgesehen, um den Massenstrom in Richtung des Wärmeübertrages 14 (Vorwärmer VW 14) zu leiten und zu dosieren. Das Wasser aus dem Zwischenkreis wird durch den VW 14 weiter ausgekühlt und anschließend im Eco 12 wieder erwärmt.

## Redundanzen trotz nicht redundanter Komponenten/Schutz vor Überhitzung

Die Verschaltung kann weiterhin verbessert werden um deren Funktionsfähigkeit bei der Verwendung von Verbrennungsmotoren für Antriebszwecke oder eine durchgängige Stromerzeugung besser gewährleisten zu können. Für den Fall, dass einzelne Komponenten des ORC-Systems ausfallen, darf dies beispielsweise nicht zur Manövrierunfähigkeit eines mit dem Verbrennungsmotor angetriebenen Schiffes führen, etwa durch Überhitzung des Wasserkreises oder des Motorkühlwassers. Hier müssen gemäß des Stands der Technik beispielsweise die Umwälzpumpen des Wasserzwischenkreises oder des ORC-Kühlkreises redundant als Doppelpumpen ausgeführt werden, was Mehrkosten bedeutet aber auch einen zusätzlichen Installations- und Wartungsaufwand.

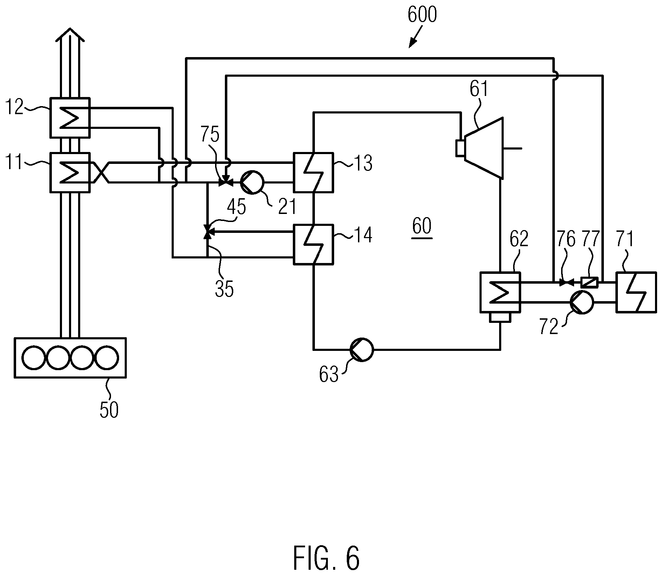

Die Verschaltung gemäß der fünften Ausführungsform 600 nach Fig. 6 bietet diese benötigte Notlauffähigkeit. Gleichzeitig können Standardkomponenten (also nichtredundante Pumpen) verwendet werden. Hierbei werden der Heißwasserkreis und der Kühlkreis, wie aus der Zeichnung ersichtlich, miteinander verbunden. In Wasserkreisen muss gewährleistet werden, dass ausreichend Abstand zur Siedetemperatur eingehalten wird. Die Siedetemperatur eines Fluids hängt vom Druckniveau ab, daher besitzen Heißwasserleitungen und deren Komponenten nach dem Stand der Technik eine höhere Druckstufe als Kaltwasserleitungen, was mit erhöhten Kosten und Anforderungen an das Material einhergeht. Die vorliegende Verschaltung macht es aufgrund der Verbindungsleitung jedoch in nicht naheliegender Weise notwendig, dass beide Wasserkreise auf den gleichen, höheren Betriebsdruck ausgelegt sind.

Auf diese Weise kann bei Ausfall des ORC Systems die Wärme am ORC 60 vorbei geleitet werden und durch das Kühlsystem gekühlt werden, dazu wird das Ventil 75 geöffnet. Bei Ausfall beispielsweise der Pumpe 21 im Heißwasserkreis würde die Pumpe 72 im Kühlwasserkreis diese Aufgabe übernehmen. Das absperrbare Ventil 76 und das geöffnete 3-Wege-Ventil 75 stellen sicher, dass das Wasser nicht rezirkuliert, sondern durch die Wärmeübertrager (AGWÜ 11 und Eco 12) geleitet wird und die Wärme betriebssicher abführt. Zudem ist hier eine Rückschlagklappe 77 wie eingezeichnet vorgesehen.

Ebenso verhält es sich bei Ausfall der Pumpe 72. Durch die Verschaltung ist nun der Betrieb des ORC 60 komplett vom Motorbetrieb entkoppelt.

Die dargestellten Ausführungsformen sind lediglich beispielhaft und der vollständige Umfang der vorliegenden Erfindung wird durch die Ansprüche definiert.

## Patentansprüche

1. Vorrichtung (100) zur Nutzung der Abwärme einer Thermoprozessvorrichtung (50), umfassend:

   einen ersten Wärmeübertrager (11) zum Übertragen von Wärme aus einem Wärmestrom der Thermoprozessvorrichtung (50) auf ein Wärmeträgermedium;
   einen zweiten Wärmeübertrager (12) zum Übertragen von Wärme aus dem Wärmestrom auf das Wärmeträgermedium, wobei der zweite Wärmeübertrager in Bezug auf den Wärmestrom stromabwärts vom ersten Wärmeübertrager angeordnet ist;
   eine thermodynamische Kreisprozessvorrichtung (60) mit einem dritten Wärmeübertrager (13) zum Übertragen von Wärme aus dem Wärmeträgermedium auf ein Arbeitsmedium der thermodynamischen Kreisprozessvorrichtung und mit einem vierten Wärmeübertrager (14) zum Übertragen von Wärme aus dem Wärmeträgermedium auf das Arbeitsmedium, wobei der vierte Wärmeübertrager in Bezug auf den Strom des Arbeitsmediums stromaufwärts vom dritten Wärmeübertrager angeordnet ist;
   wobei im dritten Wärmeübertrager abgekühltes Wärmeträgermedium zumindest teilweise dem ersten Wärmeübertrager zum Erwärmen zuführbar ist und wobei im vierten Wärmeübertrager abgekühltes Wärmeträgermedium zumindest teilweise dem zweiten Wärmeübertrager zum Erwärmen zuführbar ist; und wobei die Vorrichtung weiterhin umfasst:

Mittel (31, 41, 22, 24, 45) zum Steuern des durch den zweiten oder vierten Wärmeübertrager fließenden Massenstroms des Wärmeträgermediums;
wobei die Thermoprozessvorrichtung ein Verbrennungsmotor (50) ist;
wobei die thermodynamische Kreisprozessvorrichtung eine Organic Rankine Cycle-Vorrichtung (60) ist.

2. Vorrichtung nach Anspruch 1, wobei der erste und der dritte Wärmeübertrager in einem ersten Wärmeträgermediumkreislauf mit einer ersten Pumpe (21) angeordnet sind, der zweite und der vierte Wärmeübertrager in einem zweiten Wärmeträgermediumkreislauf mit einer zweiten Pumpe (22) angeordnet sind, und wobei der durch den zweiten Wärmeübertrager im zweiten Wärmeträgermediumkreislauf fließende Massenstrom des Wärmeträgermediums steuerbar ist, insbesondere mittels einer Bypassleitung (31) zum wenigstens teilweisen Überbrücken des zweiten Wärmeübertragers und einem Ventil (41) zum Einstellen des überbrückenden Anteils des Massenstroms.

3. Vorrichtung nach Anspruch 1, wobei der erste, zweite, dritte und vierte Wärmeübertrager in einem Wärmeträgermediumkreislauf mit einer ersten Pumpe (21) angeordnet sind, und wobei der durch den vierten Wärmeübertrager fließende Massenstrom des Wärmeträgermediums steuerbar ist, insbesondere mittels einer Bypassleitung (35) zum wenigstens teilweisen Überbrücken des vierten Wärmeübertragers und einem Ventil (45) zum Einstellen des überbrückenden Anteils des Massenstroms.

4. Vorrichtung nach Anspruch 3, wobei eine Verbindung zwischen einem Ausgang des zweiten Wärmeübertragers mit einem Eingang des ersten Wärmeübertragers vorgesehen ist, wodurch aus dem Ausgang des zweiten Wärmeübertragers austretendes Wärmeträgermedium vollständig dem Eingang des ersten Wärmeübertragers zuführbar ist.

5. Vorrichtung nach Anspruch 4, wobei der erste und der zweite Wärmeübertrager in einem gemeinsamen Gehäuse (80) angeordnet sind, die Verbindung des Ausgangs des zweiten Wärmeübertragers mit dem Eingang des ersten Wärmeübertragers innerhalb des Gehäuses ausgebildet ist, und das Gehäuse einen ersten Eingang zum Zuführen von Wärmeträgermedium zum ersten Wärmeübertrager, einen zweiten Eingang zum Zuführen von Wärmeträgermedium zum zweiten Wärmeübertrager und einen Ausgang zum Abführen von Wärmeträgermedium vom ersten Wärmeübertrager aufweist.

6. Vorrichtung nach einem der Ansprüche 3 bis 5, wobei die erste Pumpe zwischen einem Ausgang für Wärmeträgermedium des dritten Wärmeübertragers und einem Eingang für Wärmeträgermedium des ersten Wärmeübertragers angeordnet ist, und stromabwärts der ersten Pumpe eine Abzweigung für Wärmeträgermedium zum vierten Wärmeübertrager vorgesehen ist.

7. Vorrichtung nach Anspruch 6, wobei stromabwärts der Abzweigung eine Blende (85) zur Erzeugung eines Strömungswiderstands zum Eingang des ersten Wärmeübertragers vorgesehen ist, oder wobei zwischen der Abzweigung und einem Eingang des vierten Wärmeübertragers eine weitere Pumpe (24) vorgesehen ist.

8. Vorrichtung nach einem der Ansprüche 1 bis 7, wobei die thermodynamische Kreisprozessvorrichtung weiterhin eine Expansionsmaschine (61) zur Erzeugung von mechanischer Energie aus im dritten und vierten Wärmeübertrager an das Arbeitsmedium übertragener Wärmeenergie, insbesondere mit einem mit der Expansionsmaschine gekoppelten Generator zur Erzeugung von elektrischer Energie, einen Kondensator (62) zum Kondensieren von in der Expansionsmaschine expandierten Arbeitsmediums und eine Speisepumpe (63) zum Pumpen des Arbeitsmediums umfasst.

9. Vorrichtung nach Anspruch 8, wobei die thermodynamische Kreisprozessvorrichtung weiterhin einen Kühlkreislauf mit Wärmeträgermedium für den Kondensator, einen Kühler (71) zum Abführen von Wärme aus dem Wärmeträgermedium und eine zweite Pumpe (72) zum Pumpen des Wärmeträgermediums umfasst, und wobei die thermodynamische Kreisprozessvorrichtung überbrückbar vorgesehen ist, um Wärme aus dem Wärmeträgermediumkreislauf über den Kühler abzuführen.

10. Vorrichtung nach Anspruch 9 in Kombination mit Anspruch 3, wobei zum Überbrücken der thermodynamischen Kreisprozessvorrichtung im Wärmeträgermediumkreislauf eine Abzweigung mit einem zweiten Ventil (75) zum Abführen von zu kühlendem Wärmeträgermedium zum Kühler und eine Zuführung zum Zuführen von im Kühler gekühltem Wärmeträgermedium zum Wärmeträgermediumkreislauf vorgesehen sind, und wobei im Kühlkreislauf ein drittes Ventil (76) zum Sperren des Kühlkreislaufs vorgesehen ist.

11. Vorrichtung nach Anspruch 10, wobei das dritte Ventil im Kühlkreislauf zwischen einem Zuführpunkt und einem Abführpunkt für das Wärmeträgermedium aus dem Wärmeträgermediumkreislauf angeordnet ist, wobei vorzugsweise weiterhin eine Rückschlagklappe (77) zwischen dem Zuführpunkt und dem Abführpunkt vorgesehen ist, um bei geöffnetem dritten Ventil ein Strömen vom Zuführpunkt zum Abführpunkt unter Umgehung des Kühlers zu verhindern.

12. Vorrichtung nach einem der Ansprüche 1 bis 11, weiterhin einen fünften Wärmeübertrager (15) zum Übertragen von Wärme aus einer Kühlflüssigkeit der Thermoprozessvorrichtung auf das Arbeitsmedium der thermodynamischen Kreisprozessvorrichtung umfassend, wobei der fünfte Wärmeübertrager in Bezug auf den Strom des Arbeitsmediums stromaufwärts oder stromabwärts vom vierten Wärmeübertrager angeordnet ist.

13. Verfahren zur Nutzung der Abwärme einer Thermoprozessvorrichtung, wobei das Verfahren die folgenden Schritte umfasst:

Übertragen von Wärme aus einem Wärmestrom der Thermoprozessvorrichtung auf ein Wärmeträgermedium mit einem ersten Wärmeübertrager;
Übertragen von Wärme aus dem Wärmestrom auf das Wärmeträgermedium mit einem zweiten Wärmeübertrager, wobei der zweite Wärmeübertrager in Bezug auf den Wärmestrom stromabwärts vom ersten Wärmeübertrager angeordnet ist;
Übertragen von Wärme aus dem Wärmeträgermedium auf ein Arbeitsmedium einer thermodynamischen Kreisprozessvorrichtung mit einem dritten Wärmeübertrager, und Übertragen von Wärme aus dem Wärmeträgermedium auf das Arbeitsmedium mit einem vierten Wärmeübertrager der thermodynamischen Kreisprozessvorrichtung, wobei der vierte Wärmeübertrager in Bezug auf den Strom des Arbeitsmediums stromaufwärts vom dritten Wärmeübertrager angeordnet ist;
wobei im dritten Wärmeübertrager abgekühltes Wärmeträgermedium zumindest teilweise dem ersten Wärmeübertrager zum Erwärmen zugeführt wird und wobei im vierten Wärmeübertrager abgekühltes Wärmeträgermedium zumindest teilweise dem zweiten Wärmeübertrager zum Erwärmen zugeführt wird; und wobei das Verfahren weiterhin umfasst:

Steuern des durch den zweiten oder vierten Wärmeübertrager fließenden Massenstroms des Wärmeträgermediums;
wobei die Thermoprozessvorrichtung ein Verbrennungsmotor (50) ist;

wobei die thermodynamische Kreisprozessvorrichtung eine Organic Rankine Cycle-Vorrichtung (60) ist.

14. Verfahren nach Anspruch 13, wobei der erste und der dritte Wärmeübertrager in einem ersten Wärmeträgermediumkreislauf mit einer ersten Pumpe angeordnet sind, der zweite und der vierte Wärmeübertrager in einem zweiten Wärmeträgermediumkreislauf mit einer zweiten Pumpe angeordnet sind, und wobei der durch den zweiten Wärmeübertrager im zweiten Wärmeträgermediumkreislauf fließende Massenstrom des Wärmeträgermediums gesteuert wird, insbesondere durch wenigstens teilweises Überbrücken des zweiten Wärmeübertragers mittels einer Bypassleitung und durch Einstellen des überbrückenden Anteils des Massenstroms mit einem Ventil.

15. Verfahren nach Anspruch 13, wobei der erste, zweite, dritte und vierte Wärmeübertrager in einem Wärmeträgermediumkreislauf mit einer ersten Pumpe angeordnet sind, und wobei der durch den vierten Wärmeübertrager fließende Massenstrom des Wärmeträgermediums gesteuert wird, insbesondere durch wenigstens teilweises Überbrücken des vierten Wärmeübertragers mittels einer Bypassleitung und durch Einstellen des überbrückenden Anteils des Massenstroms mit einem Ventil.

**Claims**

1. Device (100) for utilizing the waste heat of a thermo-process device (50), comprising:

a first heat exchanger (11) for transferring heat from a heat flow of the thermo-process device (50) to a heat transfer medium;
a second heat exchanger (12) for transferring heat from the heat flow to the heat transfer medium, the second heat exchanger being arranged downstream of the first heat exchanger with respect to the heat flow;
a thermodynamic cycle device (60) having a third heat exchanger (13) for transferring heat from the heat transfer medium to a working medium of the thermodynamic cycle device and having a fourth heat exchanger (14) for transferring heat from the heat transfer medium to the working medium, the fourth heat exchanger being arranged upstream of the third heat exchanger with respect to the flow of the working medium;
wherein heat transfer medium cooled in the third heat exchanger can be supplied at least partially to the first heat exchanger for heating and wherein heat transfer medium cooled in the fourth heat exchanger can be supplied at least partially to the second heat exchanger for heating; and wherein the device further comprises means (31, 41, 22, 24, 45) for controlling the mass flow of the heat transfer medium flowing through the second or fourth heat exchanger; wherein the thermo-process device is an internal combustion engine;
wherein the thermodynamic cycle device is an Organic Rankine cycle device.

2. Device according to claim 1, wherein the first and the third heat exchanger are arranged in a first heat transfer medium circuit with a first pump (21), the second and the fourth heat exchanger are arranged in a second heat transfer medium circuit with a second pump (22), and wherein the mass flow of the heat transfer medium flowing through the second heat exchanger in the second heat transfer medium circuit is controllable, in particular by means of a bypass line (31) for at least partially bridging the second heat exchanger and a valve (41) for adjusting the bridging portion of the mass flow.

3. Device according to claim 1, wherein the first, second, third and fourth heat exchanger are arranged in a heat transfer medium circuit with a first pump (21), and wherein the mass flow of the heat transfer medium flowing through the fourth heat exchanger is controllable, in particular by means of a bypass line (35) for at least partially bridging the fourth heat exchanger and a valve (45) for adjusting the bridging portion of the mass flow.

4. Device according to claim 3, wherein a connection between an outlet of the second heat exchanger and an inlet of the first heat exchanger is provided, whereby heat transfer medium emerging from the outlet of the second heat exchanger can be completely supplied to the inlet of the first heat exchanger.

5. Device according to claim 4, wherein the first and second heat exchangers are arranged in a common housing (80), the connection of the outlet of the second heat exchanger with the inlet of the first heat exchanger is formed within the housing, and the housing has a first inlet for supplying heat transfer medium to the first heat exchanger, a second inlet for supplying heat transfer medium to the second heat exchanger and an outlet for discharging heat transfer medium from the first heat exchanger.

6. Device according to one of claims 3 to 5, wherein the first pump is arranged between an outlet for heat transfer medium of the third heat exchanger and an inlet for heat transfer medium of the first heat exchanger, and a branch for heat transfer medium to the fourth heat exchanger is provided downstream of the first pump.

7. Device according to claim 6, wherein downstream of the branch a screen (85) is provided to create a flow resistance to the inlet of the first heat exchanger, or wherein between the branch and an inlet of the fourth heat exchanger a further pump (24) is provided.

8. Device according to one of claims 1 to 7, the thermodynamic cycle device further comprising an expansion machine (61) for generating mechanical energy from heat energy transferred to the working medium in the third and fourth heat exchangers, in particular with a generator coupled to the expansion machine for generating electrical energy, a condenser (62) for condensing working medium expanded in the expansion machine and a feed pump (63) for pumping the working medium.

9. Device according to claim 8, wherein the thermodynamic cycle device further comprises a cooling circuit with heat transfer medium for the condenser, a cooler (71) for removing heat from the heat transfer medium and a second pump (72) for pumping the heat transfer medium, and wherein the thermodynamic cycle device is bridged to remove heat from the heat transfer medium circuit via the cooler.

10. Device according to claim 9 in combination with claim 3, wherein for bridging the thermodynamic cyclic process device in the heat transfer medium circuit a branch with a second valve (75) for discharging heat transfer medium to be cooled to the cooler and a feed for feeding heat transfer medium cooled in the cooler to the heat transfer medium circuit are provided, and wherein a third valve (76) for blocking the cooling circuit is provided in the cooling circuit.

11. Device according to claim 10, wherein the third valve is arranged in the cooling circuit between a supply point and a discharge point for the heat transfer medium from the heat transfer medium circuit, wherein preferably further a non-return flap (77) is provided between the supply point and the discharge point in order to prevent a flow from the supply point to the discharge point bypassing the cooler when the third valve is open.

12. Device according to one of claims 1 to 11, further comprising a fifth heat exchanger (15) for transferring heat from a cooling liquid of the thermo-process device to the working medium of the thermodynamic cycle device, said fifth heat exchanger being disposed upstream or downstream of said fourth heat exchanger with respect to the flow of the working medium.

**13.** Method for utilizing the waste heat of a thermo-process device, the method comprising the following steps:

transferring heat from a heat flow of the thermo-process device to a heat transfer medium with a first heat exchanger; transferring heat from the heat flow to the heat transfer medium with a second heat exchanger, the second heat exchanger being arranged downstream of the first heat exchanger with respect to the heat flow; transferring heat from the heat transfer medium to a working medium of a thermodynamic cyclic process device with a third heat exchanger, and transferring heat from the heat transfer medium to the working medium with a fourth heat exchanger of the thermodynamic cyclic process device, the fourth heat exchanger being arranged upstream of the third heat exchanger with respect to the flow of the working medium; wherein heat transfer medium cooled in the third heat exchanger is at least partially supplied to the first heat exchanger for heating and wherein heat transfer medium cooled in the fourth heat exchanger is at least partially supplied to the second heat exchanger for heating; and wherein the method further comprises:

controlling the mass flow of the heat transfer medium flowing through the second or fourth heat exchanger. wherein the thermo-process device is an internal combustion engine; wherein the thermodynamic cycle device is an Organic Rankine cycle device.

**14.** Method according to claim 13, wherein the first and the third heat exchanger are arranged in a first heat transfer medium circuit with a first pump, the second and the fourth heat exchanger are arranged in a second heat transfer medium circuit with a second pump, and wherein the mass flow of the heat transfer medium flowing through the second heat exchanger in the second heat transfer medium circuit is controlled, in particular by at least partially bridging the second heat exchanger by means of a bypass line and by adjusting the bridging portion of the mass flow with a valve.

**15.** Method according to claim 13, wherein the first, second, third and fourth heat exchanger are arranged in a heat transfer medium circuit with a first pump, and wherein the mass flow of the heat transfer medium flowing through the fourth heat exchanger is controlled, in particular by at least partially bridging the fourth heat exchanger by means of a bypass line and by adjusting the bridging portion of the mass flow with a valve.

**Revendications**

**1.** Dispositif (100) permettant d'utiliser la chaleur perdue d'un dispositif thermique (50), comprenant :

un premier échangeur de chaleur (11) permettant de transférer de la chaleur à partir d'un flux de chaleur du dispositif thermique (50) vers un milieu caloporteur ; un deuxième échangeur de chaleur (12) permettant de transférer de la chaleur à partir du flux de chaleur vers le milieu caloporteur, dans lequel le deuxième échangeur de chaleur est agencé en aval du premier échangeur de chaleur par rapport au flux de chaleur ; un dispositif à cycle thermodynamique (60) comprenant un troisième échangeur de chaleur (13) permettant de transférer de la chaleur à partir du milieu caloporteur vers un milieu de travail du dispositif à cycle thermodynamique et un quatrième échangeur de chaleur (14) permettant de transférer de la chaleur à partir du milieu caloporteur vers le milieu de travail, dans lequel le quatrième échangeur de chaleur est agencé en amont du troisième échangeur de chaleur par rapport à la circulation du milieu de travail ; dans lequel du milieu caloporteur refroidi dans le troisième échangeur de chaleur peut être alimenté au moins partiellement vers le premier échangeur de chaleur en vue d'un chauffage et dans lequel du milieu caloporteur refroidi dans le quatrième échangeur de chaleur peut être alimenté au moins partiellement vers le deuxième échangeur de chaleur en vue d'un chauffage ; et dans lequel le dispositif comprend en outre :

des moyens (31, 41, 22, 24, 45) permettant de commander le débit massique du milieu caloporteur passant par le deuxième ou le quatrième échangeur de chaleur ; dans lequel le dispositif thermique est un moteur à combustion interne (50) ; dans lequel le dispositif à cycle thermodynamique est un dispositif à cycle de Rankine organique (60).

**2.** Dispositif selon la revendication 1, dans lequel les premier et troisième échangeurs de chaleur sont agencés au sein d'un premier circuit de milieu caloporteur comprenant une première pompe (21), les deuxième et quatrième échangeurs de chaleur sont agencés au sein d'un deuxième circuit de milieu caloporteur comprenant une deuxième pompe (22), et dans lequel le débit massique du milieu caloporteur passant par le deuxième échangeur de chaleur du deuxième circuit de milieu caloporteur peut être commandé, en particulier au moyen d'une conduite de dérivation (31) permettant de dériver au moins partiellement le deuxième échangeur de chaleur et d'une vanne (41) permettant d'ajuster la part dérivée du débit massique.

3. Dispositif selon la revendication 1, dans lequel les premier, deuxième, troisième et quatrième échangeurs de chaleur sont agencés au sein d'un circuit de milieu caloporteur comprenant une première pompe (21), et dans lequel le débit massique du milieu caloporteur passant par le quatrième échangeur de chaleur peut être commandé, en particulier au moyen d'une conduite de dérivation (35) permettant de dériver au moins partiellement le quatrième échangeur de chaleur et d'une vanne (45) permettant d'ajuster la part dérivée du débit massique.

4. Dispositif selon la revendication 3, dans lequel une liaison entre une sortie du deuxième échangeur de chaleur et une entrée du premier échangeur de chaleur est fournie, ce qui permet d'alimenter vers l'entrée du premier échangeur de chaleur l'intégralité du milieu caloporteur sortant de la sortie du deuxième échangeur de chaleur.

5. Dispositif selon la revendication 4, dans lequel les premier et deuxième échangeurs de chaleur sont agencés dans un boîtier commun (80), la liaison entre la sortie du deuxième échangeur de chaleur et l'entrée du premier échangeur de chaleur est constituée à l'intérieur du boîtier, et le boîtier présente une première entrée permettant d'alimenter du milieu caloporteur vers le premier échangeur de chaleur, une seconde entrée permettant d'alimenter du milieu caloporteur vers le deuxième échangeur de chaleur et une sortie permettant d'évacuer le milieu caloporteur hors du premier échangeur de chaleur.

6. Dispositif selon l'une quelconque des revendications 3 à 5, dans lequel la première pompe est agencée entre une sortie de milieu caloporteur du troisième échangeur de chaleur et une entrée de milieu caloporteur du premier échangeur de chaleur, et une déviation de milieu caloporteur vers le quatrième échangeur de chaleur est fournie en aval de la première pompe.

7. Dispositif selon la revendication 6, dans lequel un diaphragme (85) permettant de générer une résistance à l'écoulement vers l'entrée du premier échangeur de chaleur est fourni en aval de la déviation, ou dans lequel une pompe (24) supplémentaire est prévue entre la déviation et une entrée du quatrième échangeur de chaleur.

8. Dispositif selon l'une quelconque des revendications 1 à 7, dans lequel le dispositif à cycle thermodynamique comprend en outre une machine à expansion (61) permettant de produire de l'énergie mécanique à partir de l'énergie thermique transmise au milieu de travail dans les troisième et quatrième échangeurs de chaleur, en particulier au moyen d'un générateur couplé à la machine à expansion et permettant de produire de l'énergie électrique, un condenseur (62) permettant de condenser le milieu de travail expansé dans la machine à expansion et une pompe d'alimentation (63) permettant de pomper le milieu de travail.

9. Dispositif selon la revendication 8, dans lequel le dispositif à cycle thermodynamique comprend en outre un circuit de refroidissement avec du milieu caloporteur pour le condenseur, un refroidisseur (71) permettant de dissiper la chaleur du milieu caloporteur et une seconde pompe (72) permettant de pomper le milieu caloporteur, et dans lequel le dispositif à cycle thermodynamique est fourni de manière à pouvoir être dérivé afin de dissiper la chaleur du circuit de milieu caloporteur par l'intermédiaire du refroidisseur.

10. Dispositif selon la revendication 9 en combinaison avec la revendication 3, dans lequel une déviation munie d'une deuxième vanne (75) et permettant d'évacuer le milieu caloporteur à refroidir vers le refroidisseur et une alimentation permettant d'alimenter le milieu caloporteur refroidi dans le refroidisseur vers le circuit de milieu caloporteur sont fournies au sein du circuit de milieu caloporteur afin de dériver le dispositif à cycle thermodynamique, et dans lequel une troisième vanne (76) permettant de bloquer le circuit de refroidissement est fournie au sein du circuit de refroidissement,.

11. Dispositif selon la revendication 10, dans lequel la troisième vanne est agencée dans le circuit de refroidissement entre un point d'alimentation et un point d'évacuation du milieu caloporteur issu du circuit de milieu caloporteur, dans lequel un clapet anti-retour (77) est de manière préférée en outre fourni entre le point d'alimentation et le point d'évacuation afin, lorsque la troisième vanne est ouverte, d'empêcher la circulation entre le point d'alimentation et le point d'évacuation en contournant le refroidisseur.

12. Dispositif selon l'une quelconque des revendications 1 à 11, comprenant en outre un cinquième échangeur de chaleur (15) permettant de transférer de la chaleur à partir d'un liquide de refroidissement du dispositif thermique vers le milieu de travail du dispositif à cycle thermodynamique, dans lequel le cinquième échangeur de chaleur est agencé en amont ou en aval du quatrième échangeur de chaleur par rapport à la circulation du milieu de travail.

**13.** Procédé d'utilisation de la chaleur perdue d'un dispositif thermique, dans lequel le procédé comprend les étapes ci-dessous :

transférer de la chaleur à partir d'un flux de chaleur du dispositif thermique vers un milieu caloporteur à l'aide d'un premier échangeur de chaleur ;
transférer de la chaleur à partir du flux de chaleur vers le milieu caloporteur à l'aide d'un deuxième échangeur de chaleur, dans lequel le deuxième échangeur de chaleur est agencé en aval du premier échangeur de chaleur par rapport au flux de chaleur ;
transférer de la chaleur à partir du milieu caloporteur vers un milieu de travail d'un dispositif à cycle thermodynamique à l'aide d'un troisième échangeur de chaleur, et transférer de la chaleur à partir du milieu caloporteur vers le milieu de travail à l'aide d'un quatrième échangeur de chaleur du dispositif à cycle thermodynamique, dans lequel le quatrième échangeur de chaleur est agencé en amont du troisième échangeur de chaleur par rapport à la circulation du milieu de travail ;
dans lequel du milieu caloporteur refroidi dans le troisième échangeur de chaleur est alimenté au moins partiellement vers le premier échangeur de chaleur en vue d'un chauffage et dans lequel du milieu caloporteur refroidi dans le quatrième échangeur de chaleur est alimenté au moins partiellement vers le deuxième échangeur de chaleur en vue d'un chauffage ; et dans lequel le procédé comprend en outre l'étape consistant à :

commander le débit massique du milieu caloporteur passant par le deuxième ou le quatrième échangeur de chaleur ;
dans lequel le dispositif thermique est un moteur à combustion interne (50) ;
dans lequel le dispositif à cycle thermodynamique est un dispositif à cycle de Rankine organique (60).

**14.** Procédé selon la revendication 13, dans lequel les premier et troisième échangeurs de chaleur sont agencés au sein d'un premier circuit de milieu caloporteur comprenant une première pompe, les deuxième et quatrième échangeurs de chaleur sont agencés au sein d'un deuxième circuit de milieu caloporteur comprenant une deuxième pompe, et dans lequel le débit massique du milieu caloporteur passant par le deuxième échangeur de chaleur du deuxième circuit de milieu caloporteur est commandé, en particulier grâce à une dérivation au moins partielle du deuxième échangeur de chaleur au moyen d'une conduite de dérivation et grâce à un ajustement de la part dérivée du débit massique au moyen d'une vanne.

**15.** Procédé selon la revendication 13, dans lequel les premier, deuxième, troisième et quatrième échangeurs de chaleur sont agencés au sein d'un circuit de milieu caloporteur comprenant une première pompe, et dans lequel le débit massique du milieu caloporteur passant par le quatrième échangeur de chaleur est commandé, en particulier grâce à une dérivation au moins partielle du quatrième échangeur de chaleur au moyen d'une conduite de dérivation et grâce à un ajustement de la part dérivée du débit massique au moyen d'une vanne.

FIG. 1

FIG. 2

FIG. 3

FIG. 4

FIG. 5

FIG. 6

**IN DER BESCHREIBUNG AUFGEFÜHRTE DOKUMENTE**

**In der Beschreibung aufgeführte Patentdokumente**

- DE 102016100912 A1
- US 20160061059 A1